# FASCICULE DE BREVET EUROPEEN

(11) **EP 1 589 601 B1**
(45) Date de publication et mention de la délivrance du brevet: **21.08.2013**
(21) Numéro de dépôt: 05008360.9
(22) Date de dépôt: 18.04.2005
(51) Int. Cl.: B60L 11/18

(54) **Chaîne de traction électrique pour véhicule, comportant une résistance électrique de dissipation refroidie par liquide de refroidissement.**
Elektrisches Betriebssystem für ein Fahrzeug, mit dissipativem elektrischem Widerstand gekühlt mit Kühlflussigkeit
Electric traction system for vehicles, comprising an electric disipating resistor cooled by a cooling liquid

(30) Priorité: 21.04.2004 FR 0404249
(43) Date de publication de la demande: 26.10.2005
(73) Titulaire: MICHELIN Recherche et Technique S.A., 1763 Granges-Paccot (CH); PAUL SCHERRER INSTITUT, 5232 Villigen PSI (CH)
(72) Inventeur: Varenne, Pierre, 1740 Neyruz (CH)
(74) Mandataire: Bauvir, Jacques

(56) Documents cités:
- WO-A-96/41393
- US-A- 5 346 778
- US-A1- 2003 133 267

## Description

### DOMAINE DE L'INVENTION

La présente invention se rapporte aux véhicules automobiles à pile à combustible. Plus particulièrement, elle se rapporte à la gestion de l'énergie électrique dans certaines phases transitoires.

### ETAT DE LA TECHNIQUE

Sans revenir sur les raisons conduisant à fabriquer de l'énergie électrique à bord d'un véhicule plutôt que de se contenter de la stocker, il est bien connu que l'une des possibilités pour fabriquer cette énergie électrique est d'utiliser une pile à combustible. Une autre des possibilités connues est d'entraîner une machine électrique au moyen d'un moteur consommant un combustible fossile, par exemple un moteur à combustion interne. Dans ce dernier cas, on connaît l'architecture dite « hybride série » et l'architecture dite « hybride parallèle ». Les installations permettant de produire de l'énergie électrique à bord d'un véhicule sont donc diverses.

Dans certaines configurations, il est difficile d'annuler brutalement la puissance produite par ces installations. C'est notamment le cas des piles à combustible, car elles sont en général alimentées en oxygène en comprimant l'air ambiant en temps réel au moment de l'utilisation, ce qui suppose une certaine inertie liée à l'inertie du compresseur. Dans certaines configurations, on a observé que la réaction d'une pile à combustible aux changements de puissance est peu dynamique, beaucoup moins dynamique qu'un moteur à combustion interne.

Ceci est vrai aussi bien lorsque le besoin en puissance augmente que lorsque le besoin en puissance diminue. Dans certains cas, par exemple lorsque le conducteur du véhicule souhaite brutalement ralentir alors que juste auparavant il commandait une pleine accélération, la puissance électrique consommée par un véhicule hybride série ou à pile à combustible peut diminuer très brutalement, beaucoup plus rapidement que la puissance produite par l'installation. Or, il se peut que le stockage d'énergie électrique soit impossible, par exemple parce qu'il n'y a pas d'accumulateur électrique ou parce que, si le véhicule est pourvu d'une batterie d'accumulateurs, ceux-ci sont déjà à leur charge maximale. Il faut alors dissiper l'énergie électrique produite en excédent par l'installation.

Par ailleurs, il est bien connu que les machines électriques sont réversibles. Ainsi, dans un véhicule automobile à traction électrique, la machine électrique couplée mécaniquement aux roues motrices peut être utilisée en moteur électrique pour assurer la propulsion du véhicule, en fournissant de l'énergie électrique à la machine électrique. Celle-ci peut être utilisée aussi en génératrice électrique pendant les phases de freinage du véhicule et dans ce cas elle transforme l'énergie mécanique de freinage en énergie électrique que le véhicule doit absorber, éventuellement par dissipation thermique. Ce mode de fonctionnement est souvent appelé « freinage électrique ».

Si un objectif de bon sens est bien entendu de récupérer autant que possible l'énergie lors des freinages du véhicule, on sait que cette récupération se heurte aux caractéristiques des dispositifs de stockage de l'énergie électrique connus actuellement. Si l'on fait fonctionner la machine électrique en génératrice au couple maximal dont elle est capable, on va renvoyer sur la ligne électrique un courant très intense. Or, la plupart des batteries ne sont pas capables d'absorber des courants de charge importants. Seuls les condensateurs peuvent absorber des courants de charge aussi importants que les courants de décharge, mais leur capacité de stockage reste faible. La technologie des super condensateurs peut s'avérer intéressante pour les applications automobiles en offrant une capacité de stockage par unité de masse (c'est à dire une densité d'énergie) plus importante que les condensateurs et permettant des courants de charge plus importants que les batteries. Malgré tout, installer des accumulateurs entraîne toujours une augmentation de poids proportionnelle à leur capacité de stockage, à même technologie, et de plus, quelle que soit la technologie utilisée pour stocker l'énergie électrique, on se heurtera toujours à l'impossibilité de poursuivre l'accumulation d'énergie électrique lorsque l'état de charge des dispositifs utilisés est à son maximum.

Or, il est intéressant de pouvoir, malgré tout, continuer à utiliser la ou les machines électriques en génératrice pour assurer la décélération ou le freinage du véhicule ne fût-ce que pour alléger la sollicitation des freins mécaniques du véhicule. Il est en effet avantageux de n'utiliser ceux-ci que dans les manoeuvres d'urgence ou pour les freinages les plus importants afin d'éviter un échauffement important en utilisation courante. De plus, le freinage électrique apporte un confort de conduite comparable au ressenti amené dans un véhicule conventionnel par le frein moteur, ce qui est de nature à faciliter la prise en main de tels véhicules par des conducteurs dont les réflexes ont été forgés par la conduite de ces véhicules conventionnels.

Pour toutes les raisons évoquées ci-dessus, il est utile de pouvoir dissiper dans une résistance électrique l'énergie électrique excédentaire. Il est bien connu d'utiliser une résistance électrique de dissipation. La dissipation va se produire dans la résistance par transformation de l'énergie électrique en chaleur : c'est l'effet Joule. Se pose alors le problème de pouvoir refroidir de façon efficace cette résistance électrique ou ces résistances électriques de dissipation.

Dans des dispositions connues, la ou les résistances électriques de dissipation sont dimensionnées et installées pour pouvoir être refroidies efficacement par une circulation d'air. A cette fin, soit la ou les résistances électriques font saillie par rapport au corps du véhicule, soit, si elles sont plus intégrées, il est nécessaire d'aménager des ouïes prélevant un certain flux l'air pour le canaliser jusqu'aux résistances puis le rejeter à l'extérieur, comme on le fait pour refroidir le radiateur dans tout véhicule à moteur thermique refroidi par liquide. Malheureusement, dans tous les cas, cela provoque nécessairement une dégradation des qualités aérodynamiques du véhicule.

Dans d'autres dispositions connues, par exemple par la publication « Hybrid III » disponible dans le DISS. ETH N° 11672 page 21 et DISS. ETH N° 11784 pp 30, 60, la chaîne de traction hybride utilise une résistance électrique plongée dans le liquide du circuit de refroidissement du moteur thermique, afin d'améliorer l'efficacité de la dissipation des calories électriques et afin de maintenir le moteur thermique à une température de fonctionnement idéale même lorsqu'il ne délivre pas de puissance.

Par ailleurs, la ou les machines électriques ainsi que le ou les modules électroniques de commande qui leur sont associés doivent eux-mêmes être refroidis de façon aussi efficace que possible, car leur rendement ne peut être de 100%. Ceci est d'autant plus critique que la puissance massique de ces machines électriques et/ou de ces modules électroniques s'élève. Malgré tout le soin apporté au choix des matériaux et à la construction des machines électriques ou des modules électroniques, on sait qu'il est inévitable que lorsque l'on fait traverser un courant électrique important au travers du stator de ces machines, il faut évacuer les calories dues aux pertes (par effet Joules, etc.).

Afin d'assurer une évacuation aussi efficace que possible de ces calories, il est bien connu que le refroidissement au moyen d'un liquide caloporteur est bien plus efficace que le refroidissement par air. La plupart du temps, ce circuit de refroidissement est un circuit fermé dans lequel circule un liquide caloporteur, mis en contact avec les organes à refroidir et évacuant les calories grâce à un radiateur. Cette solution présente l'avantage d'une grande efficacité et permet une régulation assez fine de la température de fonctionnement des organes du système de production d'énergie électrique.

La ou les machines électriques entraînant la ou les roues motrices du véhicule ainsi que la plupart des modules électroniques de commande de ces machines électriques sont en général eux aussi refroidis à l'aide d'un liquide de refroidissement. Ceci permet de garantir une bonne fiabilité de tous ces composants électriques ainsi qu'une bonne compacité de ceux-ci.

Par exemple, la demande de brevet US2003/0001440 et le brevet US 6,087,744 montrent des machines électriques comportant une canalisation pour la circulation d'un liquide de refroidissement, la canalisation étant aménagée dans un fourreau extérieur de la machine électrique. La demande de brevet US2002/0027027 montre un circuit de refroidissement commun, entre autres, à une machine électrique de traction, une pile à combustible et un module électronique de pilotage de la machine électrique de traction.

La demande de brevet WO96/41393 décrit une pile à combustible pour véhicule dans laquelle une résistance électrique est plongée dans le liquide du circuit de refroidissement de la pile à combustible pour pouvoir réchauffer très vite la pile à combustible. La résistance électrique peut le cas échéant être alimentée en courant électrique en produisant de l'énergie électrique lors du freinage du véhicule pour accélérer la mise en température de la pile ou pour la maintenir en température. Le brevet US 6,448,535 décrit aussi une pile à combustible pour véhicule dans laquelle une résistance électrique est plongée dans le liquide d'un circuit primaire de refroidissement de la pile à combustible pour pouvoir éviter que le liquide gèle car celui-ci est, selon ce brevet, nécessairement de l'eau dé-ionisée. Ce circuit primaire de refroidissement est couplé thermiquement à un circuit secondaire de refroidissement par liquide avec lequel il échange ses calories. Le circuit secondaire de refroidissement est seul pourvu d'un radiateur d'échange avec l'atmosphère et est aussi utilisé pour refroidir un moteur électrique.

La multiplicité des schémas proposés montre qu'il n'est pas si simple de concevoir une chaîne de traction électrique pour véhicule capable de gérer des puissances importantes, tout en utilisant des éléments assez compacts, tout en offrant une réponse aussi dynamique que possible aux sollicitations du conducteur, notamment pour freiner rapidement et en toute sécurité, et tout en maintenant pour tous les éléments des températures de fonctionnement non préjudiciables à leur fiabilité.

### BREVE DESCRIPTION DE L'INVENTION

L'objectif de l'invention est d'apporter une solution bien adaptée aux applications automobiles à la nécessaire dissipation de l'énergie électrique créée de façon excédentaire par une installation de production d'énergie électrique comme une pile à combustible lorsqu'elle est incapable de baisser rapidement la puissance délivrée, et/ou pendant le fonctionnement en freinage électrique des véhicules.

L'invention propose une chaîne de traction électrique pour véhicule, ladite chaîne de traction comprenant :
- une ligne électrique ;
- une installation permettant de fabriquer à bord de l'énergie électrique, l'installation étant raccordée à la ligne électrique, l'installation ayant un premier circuit de refroidissement assurant le refroidissement de l'installation au moyen d'une première charge de liquide caloporteur, le premier circuit de refroidissement comportant un premier radiateur de dissipation des calories vers l''atmosphère ambiante ;
- une unité de gestion de l'énergie électrique ;
- au moins une machine électrique reliée à au moins une roue motrice, connectée à la ligne électrique au moyen d'un module électronique de pilotage de la machine électrique, la machine électrique étant reliée à un second circuit de refroidissement comportant un second radiateur de dissipation des calories vers l'atmosphère ambiante, le second circuit de refroidissement utilisant une seconde charge de liquide caloporteur indépendante de la première charge utilisée dans le premier circuit de refroidissement, le second circuit de refroidissement étant en outre thermiquement découplé du premier circuit de refroidissement ;
- une résistance électrique de dissipation pouvant être connectée électriquement à ladite ligne électrique, la résistance électrique de dissipation étant immergée dans le premier circuit de refroidissement.

Dans une application tout particulièrement intéressante de l'invention, ladite l'installation comprend une pile à combustible. En ce qui concerne le comburant, soit on alimente la pile à combustible en air atmosphérique comprimé et on rejette en aval de la pile à combustible le gaz en excès dans lequel la proportion d'oxygène a diminué, soit on alimente la pile à combustible en oxygène pur. Cette dernière solution présente des avantages, notamment une réponse plus dynamique de la pile à une demande de courant, ce qui est intéressant en particulier pour les applications aux engins de transport comme les automobiles dont on sait qu'elles imposent des conditions de fonctionnement particulièrement intermittentes, contrairement aux applications stationnaires. Comme avantages d'une alimentation d'une pile à combustible en oxygène pur, citons encore que le rendement et la densité de puissance sont meilleurs.

Ayant observé que, en cas de freinage électrique, l'installation de production d'énergie électrique à bord du véhicule n'est pas sollicitée, ou du moins l'est beaucoup moins car une partie significative de l'énergie électrique dont a besoin le véhicule provient alors de la décélération du véhicule, l'invention prévoit deux circuits de refroidissement séparés : un premier circuit de refroidissement à liquide de refroidissement assure le refroidissement de la pile à combustible, et un deuxième circuit de refroidissement à liquide de refroidissement, indépendant du premier cité, concerne la ou les machines électriques reliées aux roues motrices ainsi que les modules électroniques de commande, notamment ceux pilotant ces machines électriques, et la résistance électrique de dissipation est immergée dans le premier circuit de refroidissement.

Puisque le système de production de l'énergie électrique n'est pas sollicité ou est sollicité à faible charge pendant les phases de freinage électrique, la puissance de refroidissement du circuit de refroidissement de cette partie du véhicule n'est pas sollicitée. On comprend donc que la meilleure implantation pour la résistance électrique de dissipation de l'énergie électrique de freinage est dans celui des circuits de refroidissement qui concerne le système de production de l'énergie électrique. En effet, côté machine électrique reliée aux roues motrices du véhicule, que l'on fonctionne en traction ou en freinage, cette machine électrique est susceptible d'être sollicitée au maximum de ses capacités, ainsi que tous les organes de commande de celle-ci. Or le rendement est sensiblement le même quel que soit le sens de la transformation d'énergie (énergie électrique en énergie cinétique, ou inversement). Les pertes responsables d'un dégagement de calories sont donc toujours sensiblement les mêmes.

Utiliser le circuit de refroidissement de la ou des machines électriques couplées mécaniquement aux roues pour en plus refroidir la résistance électrique de dissipation reviendrait à solliciter d'autant plus ce circuit de refroidissement et à devoir le dimensionner en conséquence. On se débarrasse de cette contrainte en installant la résistance électrique de dissipation dans le circuit de refroidissement de la pile à combustible car, pendant les phases de freinage électrique, elle n'est pas sollicitée pour délivrer une puissance importante. La puissance de refroidissement de ce circuit de refroidissement est donc disponible pour évacuer les calories produites par la résistance électrique de dissipation.

Il est judicieux de prévoir deux circuits de refroidissement séparés pour une autre raison : les niveaux de température des circuits peuvent être différents. On aura intérêt à travailler à environ 90°C par exemple pour le circuit de refroidissement d'un moteur thermique ou 70°C à 80°C par exemple pour le circuit de refroidissement d'une pile à combustible et à température de 50°C par exemple, voire moins si possible, sur le circuit de refroidissement des machines électriques et dispositifs de commande associés.

L'invention est illustrée dans la suite grâce à une mise en oeuvre particulière, mais non limitative, dans laquelle l'installation comprend une pile à combustible. Il peut s'agir d'une pile à combustible alimentée en oxygène à partir d'un réservoir contenant de l'oxygène comprimé. Il peut également s'agir d'une pile à combustible alimentée en oxygène par compression de l'air ambiant.

### BREVE DESCRIPTION DES FIGURES

La suite de la description permet de bien faire comprendre tous les aspects de l'invention en s'appuyant sur la figure unique qui illustre les circuits de refroidissement installés sur le véhicule à traction électrique de l'invention.

### DESCRIPTION DU MEILLEUR MODE DE REALISATION DE L'INVENTION

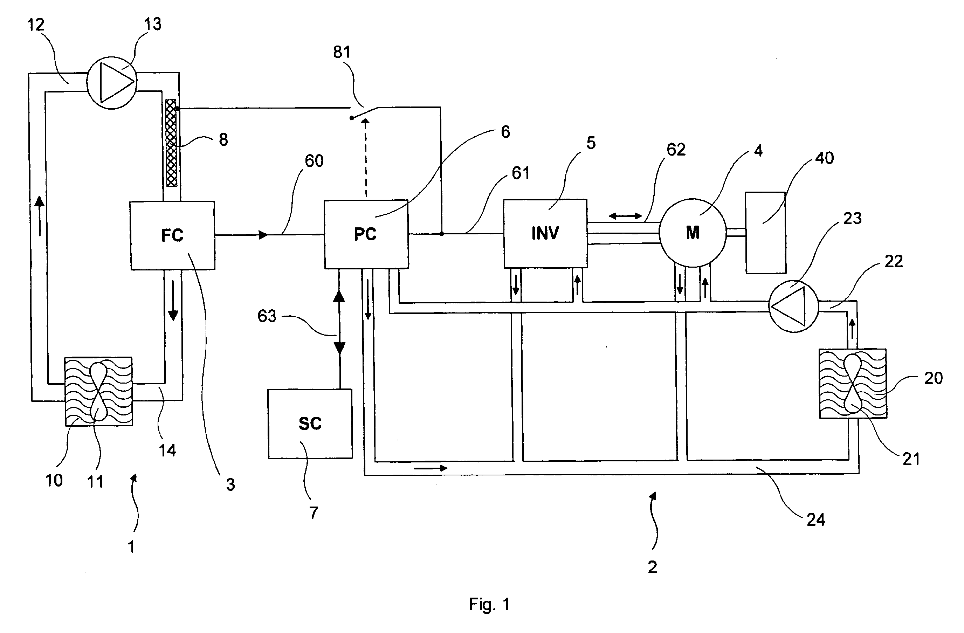

A la figure 1, on voit une pile à combustible 3 reliée à une unité de gestion de l'énergie électrique 6 par une ligne électrique 60. De préférence, la pile à combustible est une pile à membrane polymère (PEFC) ou une pile alcaline (AFC). On voit également une machine électrique 4 destinée à être utilisée en moteur de traction ou en génératrice pendant les phases de freinage électrique. La machine électrique 4 est reliée à au moins une roue motrice 40. Le module électronique de pilotage de la machine électrique est un onduleur 5. Une ligne électrique 61 relie l'unité de gestion de l'énergie électrique 6 à l'onduleur 5, et une ligne électrique 62 relie l'onduleur 5 à la machine électrique 4. Bien entendu, d'autres charges électriques (non représentées sur la figure) sont connectées à la ligne 61, comme par exemple le climatiseur du véhicule, de nombreuses fonctions périphériques comme l'éclairage du véhicule, ou d'autres fonctions principales dont le contrôle, jadis essentiellement par voie mécanique, bascule vers une commande électrique comme la direction, les freins ou même la suspension des véhicules.

La chaîne de traction selon l'invention comporte de préférence un dispositif de stockage de l'énergie électrique, raccordé à la ligne électrique 61 via l'unité de gestion 6 de l'énergie électrique, et raccordé à l'unité de gestion de l'énergie électrique 6 au moyen d'une ligne électrique 63. Ce dispositif de stockage de l'énergie électrique est avantageusement un banc de super condensateurs 7.

Un premier circuit de refroidissement 1 dans lequel circule une première charge de liquide caloporteur assure le refroidissement de la pile à combustible 3. Le premier circuit de refroidissement 1 comporte un premier radiateur 10 de dissipation des calories vers l'atmosphère ambiante, une pompe hydraulique 13, une canalisation 12 assurant la distribution du liquide de refroidissement depuis le premier radiateur 10 vers la pile à combustible 3. Le liquide de refroidissement peut être un liquide dé-ionisé pour être non conducteur de l'électricité, par exemple de l'eau ou un mélange d'eau et de glycol dé-ionisé, dans la mesure où il circule au sein même de la pile à combustible (selon l'importance de cet aspect électrique, c'est-à-dire s'il est important d'augmenter l'impédance électrique de la branche constituée par ce circuit de refroidissement). Le sens de circulation du liquide caloporteur est indiqué sur le dessin. On voit également des tuyaux 14 ramenant le liquide de refroidissement après son échauffement depuis la pile 3 vers le premier radiateur 10 assurant un échange thermique avec l'air ambiant. Comme bien connu, le refroidissement du radiateur 10 est rendu plus efficace par l'action d'un ventilateur 11 assurant une circulation forcée de l'air ambiant au travers du radiateur 10.

On voit également un second circuit de refroidissement 2 indépendant du premier circuit de refroidissement 1 et dans lequel circule un liquide de refroidissement. Le second circuit de refroidissement 2 utilise une autre charge de liquide caloporteur indépendante de la première charge utilisée dans le premier circuit de refroidissement. On peut utiliser éventuellement dans les deux circuit un liquide caloporteur de même nature mais en tout cas les charges sont séparées et donc les liquides ne se mélangent pas. Le second circuit de refroidissement est en outre thermiquement indépendant du premier circuit de refroidissement 1 : il comporte un second radiateur 20 de dissipation des calories vers l'atmosphère ambiante, différent du premier radiateur 10, une pompe hydraulique 23 et un réseau de tuyaux assurant la distribution du liquide de refroidissement vers les différents organes qu'il faut refroidir. Le sens de circulation du liquide caloporteur est indiqué sur le dessin. Le second circuit de refroidissement 2 établit une circulation de liquide de refroidissement dans plusieurs composants électriques. Le liquide de refroidissement est par exemple de l'eau ordinaire ou un mélange d'eau et de glycol.

La chaîne de traction, ou même plus généralement le véhicule propulsé par la chaîne de traction selon l'invention, pourrait comporter éventuellement différents modules électroniques de gestion autre que l'onduleur 5 déjà cité, le second circuit de refroidissement 2 établissant une circulation de liquide de refroidissement dans plusieurs modules électroniques de gestion. De préférence, tous les modules électroniques de gestion refroidis au moyen d'un liquide de refroidissement sont reliés au second circuit de refroidissement 2.

De préférence, tous les composants électriques refroidis au moyen d'un liquide de refroidissement sont reliés à ce second circuit de refroidissement 2. De façon avantageuse, la machine électrique 4 mécaniquement reliée à la ou aux roues motrices 40 du véhicule est reliée à ce second circuit de refroidissement 2.

Ainsi, on voit un réseau de tuyaux 22 assurant la distribution du liquide de refroidissement à basse température à la machine électrique 4, à l'onduleur 5 et à l'unité de gestion de l'énergie électrique 6. On voit également un réseau de tuyaux 24 ramenant le liquide de refroidissement après son échauffement depuis l'unité de gestion de l'énergie électrique 6, depuis l'onduleur 5 et depuis la machine électrique 4 vers le second radiateur 20. Comme bien connu en soi, l'efficacité de l'échange thermique du second radiateur 20 est renforcée par l'action d'un ventilateur 21 assurant une circulation forcée de l'air ambiant au travers du second radiateur 20.

Avantageusement, tous les composants électriques refroidis au moyen d'un liquide de refroidissement sont reliés au second circuit de refroidissement 2.

Une résistance électrique de dissipation 8 est installée dans le premier circuit de refroidissement 1. Cette résistance de dissipation 8 est reliée à la ligne électrique 61 via un interrupteur électronique 81, lui-même commandé par l'unité de gestion de l'énergie électrique 6.

L'unité de gestion de l'énergie électrique 6 reçoit des informations provenant du conducteur du véhicule et des informations décrivant l'état de fonctionnement du véhicule, comme la vitesse de déplacement. En phase de traction électrique, l'unité de gestion de l'énergie électrique 6 connecte directement la pile à combustible 3 à l'onduleur 5 et l'onduleur 5 transmet l'énergie électrique sous la forme appropriée à la machine électrique 4 afin que celle-ci fonctionne en moteur. Selon les circonstances, l'unité de gestion de l'énergie électrique 6 peut également connecter le banc de super condensateurs 7 à la ligne électrique 61 pendant les phases de fonctionnement en moteur afin de puiser l'énergie électrique en réserve dans le banc de super condensateurs 7 pour l'ajouter à l'énergie provenant de la pile à combustible 3.

Chacun des deux circuits de refroidissement est de préférence régulé en température, par exemple au moyen d'un thermostat non représenté. Puisque les circuits sont indépendants, la température de régulation de chacun de ceux-ci peut être différente. Par exemple, la température de régulation idéale pour une pile à combustible est un peu plus élevée que la température de régulation idéale du circuit assurant le refroidissement de la machine électrique 4 et des composants électroniques qui lui sont associés. A titre d'illustration, la température de régulation est de l'ordre de 60°C à 90°C pour une pile à membrane polymère (PEFC) et elle est de l'ordre de 45°C à 65°C pour le circuit assurant le refroidissement de la machine électrique 4 et des composants électroniques qui lui sont associés.

Lorsque le mode de fonctionnement du véhicule contrôlé par l'unité de gestion de l'énergie électrique 6 passe en freinage électrique, l'onduleur 5 pilote la machine électrique 4 en génératrice de façon à ce qu'elle renvoie de l'énergie électrique sur la ligne 61. Si l'énergie électrique ainsi renvoyée sur la ligne 61 est supérieure aux besoins du véhicule, c'est à dire à l'énergie absorbée par les autres charges électriques connectées à la ligne 61 telles que celles évoquées ci-dessus, alors le pilotage de la pile à combustible 3 arrête le fonctionnement de celle-ci. Comme l'inertie d'une pile à combustible est très faible, la pile à combustible 3 cesse rapidement de communiquer des calories au liquide de refroidissement circulant dans le premier circuit de refroidissement 1. Pendant le fonctionnement en freinage électrique, toutes les charges électriques connectées à la ligne 61 vont absorber une partie de l'énergie électrique disponible. Egalement, l'unité de gestion de l'énergie électrique 6 envoie l'énergie électrique en priorité vers le banc de super condensateurs 7, dans la limite où ceux-ci n'ont pas atteint leur charge maximale.

Cependant, si toutes ces charges ne permettent pas d'absorber l'énergie électrique disponible sur la ligne, ce que l'unité de gestion de l'énergie électrique 6 peut détecter par exemple par une élévation de la tension sur la ligne 61, alors l'unité de gestion de l'énergie électrique 6 ferme l'interrupteur 81 pour ajouter la résistance de dissipation 8 comme charge électrique. Cette résistance est capable d'absorber le courant maximal injecté sur la ligne 61 par la ou les machines électriques 4. La résistance électrique 8 de dissipation s'échauffe et les calories sont évacuées au fur et à mesure par le liquide de refroidissement qui les emmène vers le premier radiateur 10. Bien entendu, l'installation est dimensionnée de façon à ce que, même lorsque la résistance électrique de dissipation 8 est parcourue par le courant maximal possible, l'échauffement du liquide de refroidissement à l'intérieur du circuit de refroidissement 1 reste compatible avec le bon fonctionnement de la pile à combustible 3.

L'efficacité de l'évacuation des calories produites par la résistance de dissipation 8 est telle que, par comparaison avec une résistance de dissipation qui serait refroidie à l'air, on peut utiliser des résistances 8 bien plus compactes. De plus, il n'y a aucune dégradation du coefficient de pénétration dans l'air du véhicule. En effet, on utilise la capacité du radiateur 10 à évacuer des calories à un moment où il n'aurait pas été utilisé en raison de l'arrêt du fonctionnement de la pile à combustible. Ainsi, on a réussi à agencer les circuits de refroidissement de manière à utiliser au mieux leurs capacités et en profitant du caractère mutuellement exclusif du fonctionnement de la pile à combustible à sa charge maximale et de l'utilisation de la résistance de dissipation 8 à sa charge maximale.

Bien que l'invention ait été décrite en association avec une pile à combustible, elle peut être utilisée aussi dans le cas d'un véhicule hybride série ou d'un véhicule hybride parallèle.

## Revendications

1. Chaîne de traction électrique pour véhicule, ladite chaîne de traction comprenant :
- une ligne électrique (61) ;
- une installation permettant de fabriquer à bord de l'énergie électrique, l'installation étant raccordée à la ligne électrique (61), l'installation ayant un premier circuit de refroidissement (1) assurant le refroidissement de l'installation au moyen d'une première charge de liquide caloporteur, le premier circuit de refroidissement (1) comportant un premier radiateur (10) de dissipation des calories vers l'atmosphère ambiante ;
- une unité de gestion (6) de l'énergie électrique ;
- au moins une machine électrique (4) reliée à au moins une roue motrice (40), connectée à la ligne électrique (61) au moyen d'un module électronique de pilotage de la machine électrique, la machine électrique (4) étant reliée à un second circuit de refroidissement (2) comportant un second radiateur (20) de dissipation des calories vers l'atmosphère ambiante, le second circuit de refroidissement (2) utilisant une seconde charge de liquide caloporteur indépendante de la première charge utilisée dans le premier circuit de refroidissement, le second circuit de refroidissement étant en outre thermiquement découplé du premier circuit de refroidissement (1) ;
- une résistance électrique de dissipation (8) pouvant être connectée électriquement à ladite ligne électrique, la résistance électrique de dissipation (8) étant immergée dans le premier circuit de refroidissement (1).

2. Chaîne de traction selon la revendication 1, dans laquelle l'installation comprend une pile à combustible (3) alimentée en oxygène pur.

3. Chaîne de traction selon la revendication 1, dans laquelle l'installation comprend une pile à combustible alimentée en oxygène par compression de l'air ambiant.

4. Chaîne de traction selon la revendication 2 ou 3, dans laquelle la pile à combustible est choisie dans le groupe constitué par les piles à membrane polymère et les piles alcalines.

5. Chaîne de traction selon l'une des revendications 1 à 4, dans laquelle le module électronique de pilotage de la machine électrique est un onduleur (5).

6. Chaîne de traction selon l'une des revendications 1 à 5, comportant différents modules électroniques de gestion, dans laquelle le second circuit de refroidissement (2) établit une circulation de liquide de refroidissement dans plusieurs modules électroniques de gestion.

7. Chaîne de traction selon la revendication 6, dans laquelle tous les modules électroniques de gestion refroidis au moyen d'un liquide de refroidissement sont reliés au second circuit de refroidissement (2).

8. Chaîne de traction selon la revendication 1, dans laquelle un dispositif de stockage de l'énergie électrique est raccordé à la ligne électrique (61) via l'unité de gestion (6) de l'énergie électrique.

## Patentansprüche

1. Elektrisches Antriebssystem für ein Fahrzeug, wobei das Antriebssystem enthält:
- eine elektrische Leitung (61);
- eine Anlage, die es ermöglicht, an Bord elektrische Energie zu produzieren, wobei die Anlage an die elektrische Leitung (61) angeschlossen ist, wobei die Anlage einen ersten Kühlkreis (1) hat, der die Kühlung der Anlage mittels einer ersten Ladung einer Wärmeträgerflüssigkeit gewährleistet, wobei der erste Kühlkreis (1) einen ersten Radiator (10) zur Abfuhr der Kalorien in die Umgebungsatmosphäre aufweist;
- eine Verwaltungseinheit (6) der elektrischen Energie;
- mindestens eine mit mindestens einem Antriebsrad (40) verbundene elektrische Maschine (4), die mit der elektrischen Leitung (61) mittels eines elektronischen Steuermoduls der elektrischen Maschine verbunden ist, wobei die elektrische Maschine (4) mit einem zweiten Kühlkreis (2) verbunden ist, der einen zweiten Radiator (20) zur Abfuhr der Kalorien in die Umgebungsatmosphäre aufweist, wobei der zweite Kühlkreis (2) eine zweite Ladung von Wärmeträgerflüssigkeit unabhängig von der im ersten Kühlkreis verwendeten ersten Ladung verwendet, wobei der zweite Kühlkreis außerdem thermisch vom ersten Kühlkreis (1) abgekoppelt ist;
- einen elektrischen Dissipationswiderstand (8), der elektrisch mit der elektrischen Leitung verbunden sein kann, wobei der elektrische Dissipationswiderstand (8) in den ersten Kühlkreis (1) eingetaucht ist.

2. Antriebssystem nach Anspruch 1, bei dem die Anlage eine Brennstoffzelle (3) enthält, die mit reinem Sauerstoff versorgt wird.

3. Antriebssystem nach Anspruch 1, bei dem die Anlage eine Brennstoffzelle enthält, die durch Verdichtung der Umgebungsluft mit Sauerstoff versorgt wird.

4. Antriebssystem nach Anspruch 2 oder 3, bei dem die Brennstoffzelle aus der Gruppe ausgewählt wird, die aus den Polymermembran-Brennstoffzellen und den alkalischen Brennstoffzellen besteht.

5. Antriebssystem nach einem der Ansprüche 1 bis 4, wobei das elektronische Steuermodul der elektrischen Maschine ein Wechselrichter (5) ist.

6. Antriebssystem nach einem der Ansprüche 1 bis 5, das verschiedene elektronische Verwaltungsmodule aufweist, wobei der zweite Kühlkreis (2) einen Kühlflüssigkeitsumlauf in mehreren elektronischen Verwaltungsmodulen aufbaut.

7. Antriebssystem nach Anspruch 6, bei dem alle mittels einer Kühlflüssigkeit gekühlten elektronischen Verwaltungsmodule mit dem zweiten Kühlkreis (2) verbunden sind.

8. Antriebssystem nach Anspruch 1, bei dem eine Speichervorrichtung der elektrischen Energie an die elektrische Leitung (61) über die Verwaltungseinheit (6) der elektrischen Energie angeschlossen ist.

## Claims

1. An electrical power train for a vehicle, the said power train comprising:
- an electrical line (61);
- an installation for producing electrical energy on board, the installation being connected to the electrical line (61), the installation having a first cooling circuit (1) providing the cooling of the installation by means of a first heat-transfer liquid charge, the first cooling circuit (1) comprising a first radiator (10) for dissipating heat to the ambient atmosphere;
- an electrical energy management unit (6);
- at least one electrical machine (4) connected to at least one driving wheel (40), connected to the electrical line (61) by means of an electronic module controlling the electrical machine, the electrical machine (4) being connected to a second cooling circuit (2) comprising a second radiator (20) for dissipating heat to the ambient atmosphere, the second cooling circuit (2) using a second heat-transfer liquid charge independent of the first charge used in the first cooling circuit, the second cooling circuit also being thermally decoupled from the first cooling circuit (1);
- an electrical dissipation element (8) able to be connected electrically to the said electrical line, the electrical dissipation element (8) being immersed in the first cooling circuit (1).

2. Power train according to Claim 1, in which the installation comprises a fuel cell (3) supplied with pure oxygen.

3. Power train according to Claim 1, in which the installation comprises a fuel cell supplied with oxygen by compression of the ambient air.

4. Power train according to Claim 2 or 3, in which the fuel cell is chosen from the group consisting of cells with a polymer membrane and alkaline cells.

5. Power train according to any of Claims 1 to 4, in which the electronic control module for the electrical machine is an inverter (5).

6. Power train according to any of Claims 1 to 5, comprising various electronic management modules, in which the second cooling circuit (2) establishes a circulation of cooling liquid in several electronic management modules.

7. Power train according to Claim 6, in which all the electronic management modules cooled by means of a cooling liquid are connected to the second cooling circuit (2).

8. Power train according to Claim 1, in which an electrical energy storage device is connected to the electrical line (61) via the electrical energy management unit (6).
